# EUROPEAN PATENT APPLICATION

(11) **EP 1 634 521 A2**
(43) Date of publication of application: **15.03.2006**
(21) Application number: 05255594.3
(22) Date of filing: 13.09.2005
(51) Int. Cl.: A47J 37/07

(54) **Barbeque arrangement**

(30) Priority: 13.09.2004 ZA 200407318
(71) Applicant: Cadac (Proprietary) Limited, Stormill Township Roodepoort (ZA)
(72) Inventor: Nash, Simon John, Bryanston, Sandton 2021 (ZA)
(74) Representative: Brereton, Paul Arthur

(57) **Abstract**

A barbecue arrangement comprises:
- a barbecue body (20) having a low level aperture (15) therein;
- an ash collecting container (25) having an upper rim (25a) and disposed below the barbecue body (20) to collect ash discharged through the low level aperture (15) in the barbecue body (20); and
- securing means (32) for removably securing the collecting container (25) to the barbecue body (20) in a position aligned with the low level aperture (15) characterized in;
- an adjustable air inlet (50) disposed between the barbecue body (20) and the upper rim (25a) of the collecting container (25).

## Description

### Field of the Invention

THIS invention relates to an ash collector arrangement. More specifically, but not exclusively, this invention relates to an ash collector arrangement for collecting ash and coals underneath a kettle-type barbeque.

### Summary of Prior Art

Many barbeque designs include a trough having an air vent located towards the lower part of the trough for the ingress of air to a combustion zone.

Having the air vents located directly underneath the combustion zone are advantageous in that ash and coals from solid fuel falls through the vent, thereby preventing the fire from being smothered. However, a disadvantage of having the air vents located underneath the fire is that when the ash and coals drop through the air vent, they may soil the area underneath the barbeque.

One solution to this problem is found in the prior art, in that an ash tray is located below the air vent holes. This prior art ashtray is supported by the same supporting legs that the barbeque is supported on. A disadvantage of this configuration is that ash collected in the tray is susceptible to wind, and a breeze may cause the ash to be blown off the tray.

### Object of the Invention

It is an object of this invention to provide an ash collector arrangement that at least partially alleviates the disadvantages mentioned, or offers an alternative to the prior art.

### Summary of the Invention

According to the invention a barbecue arrangement comprises:
- a barbecue body having a low level aperture therein;
- an ash collecting container having an upper rim and disposed below the barbecue body to collect ash discharged through the low level aperture in the barbecue body; and
- securing means for removably securing the collecting container to the barbecue body in a position aligned with the low level aperture; and
- an adjustable air inlet disposed between the barbecue body and the upper rim of the collecting container.

Further according to the invention, the inlet is adjustable by adjusting the space between the barbeque body and the rim of the collecting container.

In a p referred arrangement, relative rotation between the barbecue body and the collecting container will act to adjust the space between the barbecue body and the collecting container. Thus, in one arrangement, the securing means is in the nature of a bayonet-type arrangement, having opposed laterally projecting pin elements, and opposed angled co-operating formations engaged by the opposed pin elements so that upon relative rotation between the collecting container and the barbecue body, the collecting container is moved towards or away from the barbecue body.

In a preferred arrangement, the opposed pin elements will project inwardly and be slidable in bayonet fashion along a corresponding angled engagement formation whereby the collector container is moved towards or away from the barbecue body. In a preferred arrangement, the angled formation could be arranged in steps whereby the collecting container is moved towards or away from the barbecue body in stages, and is selectively maintained at each stage.

Also according to the invention, the angled engagement formation is formed in a downwardly depending skirt formation, which encircles at least part of the aperture in the lower zone of the barbecue body.

Alternatively, the securing means may be a threaded fastener arrangement, a snap-fit arrangement, a catch arrangement, or the like.

The ash collecting container includes a handle for rotating the container relative to the barbeque body.

The handle may be heat resistant.

The collecting container may be of heat resistant material such as aluminium, steel, or the like.

The container may be substantially hemispherically shaped.

These and other features of the invention are described in more detail below.

### Brief description of the Drawings

An embodiment of the invention is described below purely as an example thereof and without limiting the scope of the invention with reference to the accompanying drawings, wherein:
- Figure 1: is a perspective view of a barbeque body and an ash collecting container according to the invention.
- Figure 2: is a partial view of a section through the centre of the barbeque body and collecting container, showing a bayonet-type securing means with the pin element engaged in the uppermost step formation;
- Figure 3: is a partial view of section through the centre of the barbeque body and collecting container, showing the bayonet-type securing means with the pin element engaged in the second lowest step formation;
- Figure 4: is a partial view of section through the center of the barbeque body and collecting container, showing the bayonet-type securing means with the pin element engaged in the lowest step formation.
- Figure 5: is a schematic perspective view of the barbeque arrangement according to the invention showing the barbecue body in broken lines and the ash collecting container removably secured to the barbecue body;

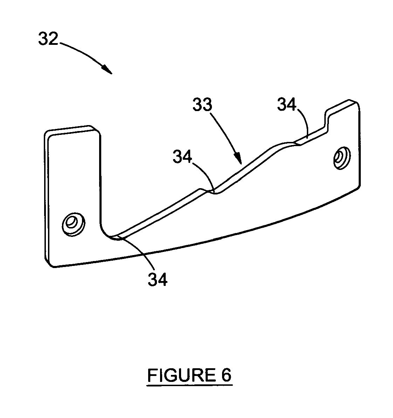

- Figure 6: is a close up view of a locking formation, showing the step formations.

### Detailed Description of the Drawings

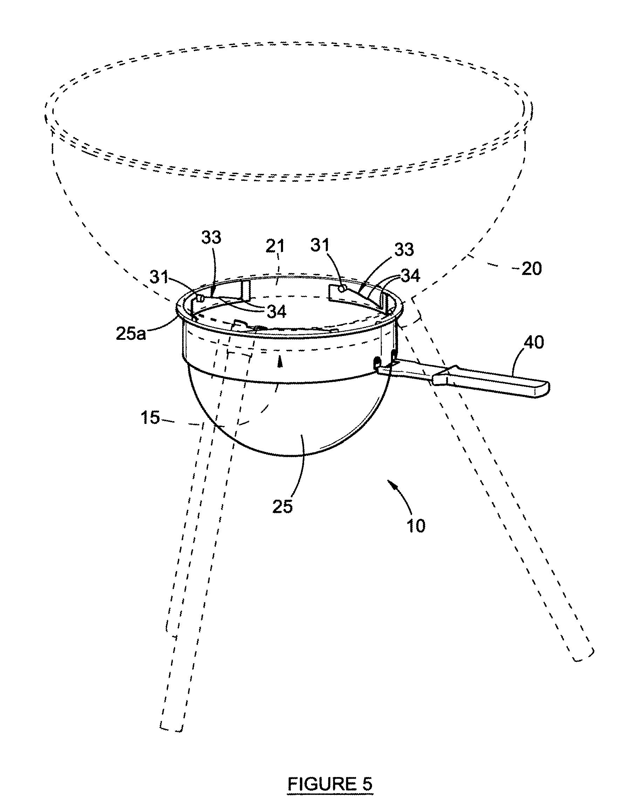

Referring to the drawings, a barbecue arrangement 10 comprises a barbecue body 20 shown in broken lines in Figure 5 which could be of a common part spherical shape, although the invention is not limited to such a shape. The barbecue arrangement further includes a low level generally central aperture 15 in the barbecue body 20 and a collecting container 25 generally vertically aligned with the aperture 15, and which is adapted to receive ash which may be discharged through the central aperture 15. The aperture 15 also acts as part of an air inlet to the interior of the barbecue body 20 as described in more detail below.

It is a feature of the invention that an air inlet to the interior of the barbecue body 20 is defined between an upper rim 25a of the collecting container 25 and the barbecue body 20.

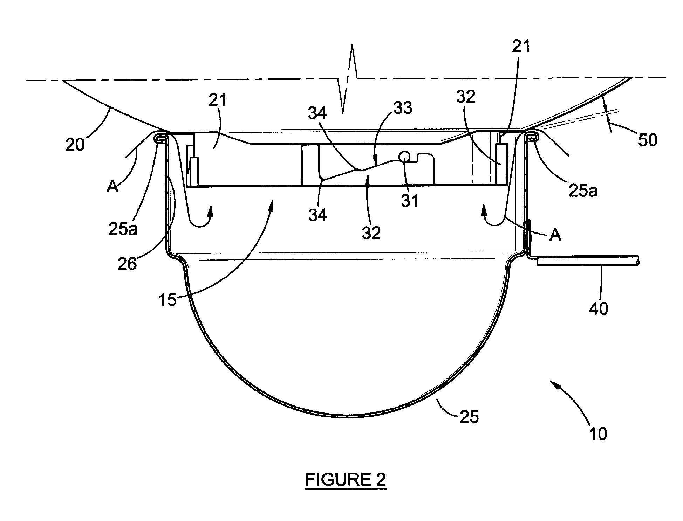

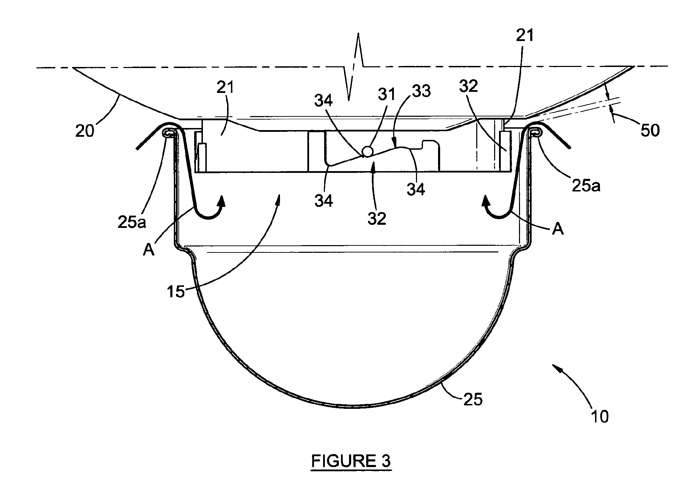

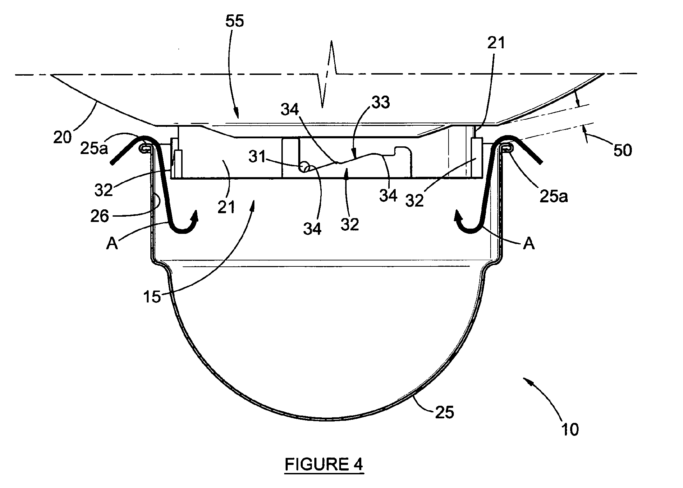

It is a further feature of the invention that the air inlet defined between the barbecue body 20 and the upper rim 25a of the collecting container is adjustable by moving the collecting container 25 towards or away from the barbecue body 20 to vary the space between these members shown by numeral 50, Figures 2, 3 and 4.

While a number of variations are possible, the invention envisages that the collecting container 25 will be moved towards or away from the barbecue body 20 in bayonet fashion 32 through the rotation of the collecting container 25 relative to the barbecue body 20. Preferably pin elements 31 of the bayonet arrangement 32 will engage an angled formation 33 in the form of a ramp so that in the arrangement illustrated, rotation of the collecting container 25 in an anti-clockwise direction will cause the pin elements 31 to draw the collecting container 25 to a position closer to the barbecue body 20, while rotation in a clockwise direction will displace the collecting container 25 away from the barbecue body 20.

The collecting container 25 is also suitable for collecting hot ash from the aperture 15 underneath a barbeque body 20, and the bayonet-type arrangement 32 removably secures the collecting container 25 to the barbeque body 20.

As stated above, the securing means shown is a bayonet-type arrangement 32, although it is envisaged that the securing means could be a threaded fastener arrangement, a snap-fit arrangement, a catch arrangement, or the like, not shown.

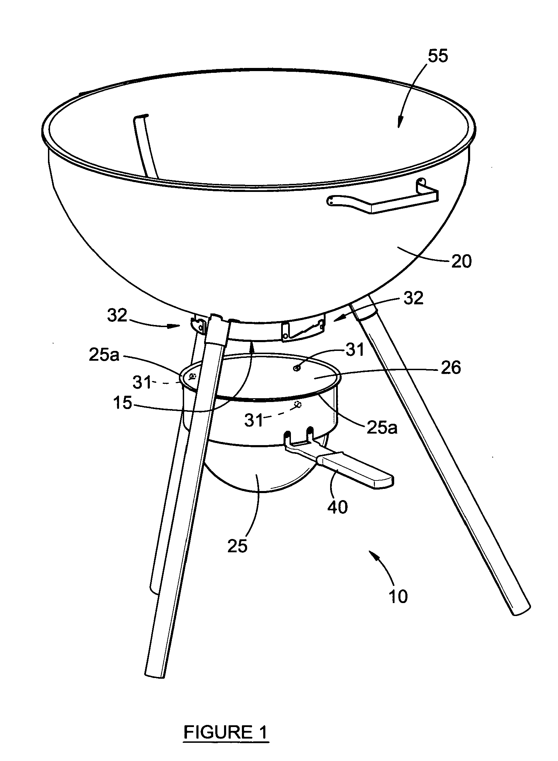

The bayonet-type arrangement 32 comprises three radially spaced pin elements 31 disposed on the inner surface 26, Figure 1 of the collecting container 25, and corresponding angled formations 33 as mentioned above. The angled members 33 each have an angled ramp 33, and are configured and dimensioned so that all of the pin elements 31 are received on the ramps 33 at the same time. Each ramp 33 further has step formations 34 so that the pin elements 31 may be moved and positioned on various levels along the ramps 33.

The ash collector arrangement 25 also includes a heat resistant handle 40 for handling the container 25 when it is hot, and to assist in engaging and disengaging the container 25 to and from the barbeque body 20.

It is envisaged that, in a preferred embodiment, the collecting container 25 will be hemispherically shaped and comprised of heat resistant material such as aluminium, steel, or the like, so that it will not be damaged by ash and coals that fall through the aperture 15 in the barbeque body 20.

The collecting container 25 is further configured and dimensioned to fit over a peripheral downwardly depending skirt 21 disposed around the periphery of the aperture 15 in the barbeque body 20, leaving an air gap 50 between the peripheral skirt 21 and the rim 25a of the collecting container 25. the angled formations are secured on the outer surface of the skirt 21 by means of rivets or the like.

It is envisaged that in operation, air will flow (shown as arrow A) through the air gap 50 to a combustion chamber 55 within the barbeque body 20.

As disclosed above, it is envisaged that the collecting container 25 will be secured to the underside of the barbeque body 20 by means of the bayonet-type arrangement 32. By rotating the container 25 so that the pin elements 31 engage with the various step formations 34 on the ramp 33, Figures 2 to 4, the air gap 50 between the collecting container 25 and the barbeque body 20 may be adjusted to adjust air flow A to the combustion chamber 55. Thus, when the pin elements 31 are positioned on the ramp 33 so that they move on to the highest step formation 34, Figure 2, then the air gap 50 will be at its narrowest, thereby restricting the air flow A the most.

The peripheral skirt 21 will guide any coal or ash falling through the aperture 15 into the collecting container 25, while preventing spillage of the ash and/or coal out of the collecting container 25. At the same time, air flow A is allowed to flow freely to the combustion chamber 55. Once the collecting container 25 is full, the collecting container 25 may be disengaged from the locking members 32 and emptied.

It will be appreciated that many embodiments and variations are possible without departing from the spirit or scope of the invention as set out in the consistory clauses above. For example, various types of mechanisms may be used to secure the collecting container 25 to the barbeque body 20. Further, air A may be vented into the barbeque body 20 by various other means, such as through vents in the peripheral skirt 21.

## Claims

1. A barbecue arrangement comprising
- a barbecue body (20) having a low level aperture (15) therein;
- an ash collecting container (25) having an upper rim (25a) and disposed below the barbecue body (20) to collect ash discharged through the low level aperture (15) in the barbecue body (20); and
- securing means (32) for removably securing the collecting container (25) to the barbecue body (20) in a position aligned with the low level aperture (15) **characterized in**;
- an adjustable air inlet (50) disposed between the barbecue body (20) and the upper rim (25a) of the collecting container (25).

2. The barbecue arrangement according to claim 1 **characterized in that** the air inlet (50) is adjustable by adjusting the space between the barbeque body (20) and the rim (25a) of the collecting container (25).

3. The barbecue arrangement according to claim 1 **characterized in that** relative rotation between the barbecue body and the collecting container acts to adjust the space (50) between the barbecue body (20) and the collecting container (25).

4. The barbecue arrangement according to claim 1 wherein the securing means is in the nature of a bayonet-type arrangement, having laterally projecting pin elements (31), and angled co-operating formations (33) engaged by the pin elements (31) so that upon relative rotation between the collecting container (25) and the barbecue body (20), the collecting container (25) is moved towards or away from the barbecue body (20).

5. The barbecue arrangement according to claim 4 **characterized in that** the pin elements (31) project inwardly and the angled formations (33) are arranged in steps whereby the collector container is moved towards and away from the barbecue body in stages and is selectively maintained at each stage.

6. The barbecue arrangement according to claim 5 **characterized in that** each angled engagement formation (33) is formed on a peripheral downwardly depending skirt formation (21) which encircles at least part of the aperture (15) in the lower zone of the barbecue body (20).

7. The barbecue arrangement according to any one of claims 1 to 3 **characterized in that** the securing means (32) is a threaded fastener arrangement, a snap-fit arrangement, or a catch arrangement.

8. The barbecue arrangement according to any one of claims 1 to 7 **characterized in that** the ash collecting container (25) includes a heat resistant handle (40).
